# EUROPÄISCHE PATENTSCHRIFT

(11) **EP 0 732 170 B1**
(45) Veröffentlichungstag und Bekanntmachung des Hinweises auf die Patenterteilung: **02.08.2000**
(21) Anmeldenummer: 96103741.3
(22) Anmeldetag: 09.03.1996
(51) Int. Cl.: B23Q 17/22, G01B 21/04

(54) **Vorrichtung zur Überprüfung der Genauigkeit einer Kreisbahn einer Arbeitsspindel**
Device for checking the accuracy of the orbit of a spindle
Dispositif pour vérifier la précision de l'orbite d'une broche

(30) Priorität: 15.03.1995 DE 19509403
(43) Veröffentlichungstag der Anmeldung: 18.09.1996
(73) Patentinhaber: Dreier Lasermesstechnik GmbH, 72160 Horb/Neckar (DE)
(72) Erfinder: Dreier, Horst E., 72160 Horb/Neckar (DE)
(74) Vertreter: Dreiss, Fuhlendorf, Steimle & Becker, Patentanwälte

(56) Entgegenhaltungen:
- EP-A- 0 258 471
- EP-A- 0 329 635
- EP-A- 0 508 686
- EP-A- 0 526 056
- US-A- 4 435 905
- US-A- 5 052 115
- US-A- 5 111 590

## Beschreibung

Die Erfindung bezieht sich auf eine Vorrichtung zur Überprüfung der Genauigkeit der Kreisbahn mit den Merkmalen des Oberbegriffs des Anspruchs 1.

Eine derartige Vorrichtung der Anmelderin ist bereits bekannt. Sie wird in Verbindung mit einem auf den Arbeitstisch der NC-Maschine aufsetzbaren hochgenauen Referenzzylinder verwendet, wobei der Meßwertaufnehmer entlang der Zylinder-Außenfläche dieses Referenzzylinders geführt wird. Die geometrische Achse des Referenzzylinders befindet sich dabei an der Stelle, an der sich später auch die geometrische Längsachse einer zu bearbeitenden Bohrung, Mantelfläche oder dergleichen befindet. Bei der Bearbeitung dieser Mantelfläche o.dgl. wandert später die Spindel mit dem Bearbeitungswerkzeug, beispielsweise einem Fräser, auf der überprüften Kreisbahn um diese Mantelfläche. Es ist einleuchtend, daß die Bearbeitung umso genauer ist, je genauer die Kreisbahn vom Bearbeitungswerkzeug eingehalten wird oder nach dem Ballbar-Verfahren (Maschinenmarkt 101 (1995) 3, Seiten 22 ff).

Die Betreiber von NC-Werkzeugmaschinen stellen in Bezug auf Maschinengenauigkeit und Prozeßfähigkeit immer höhere Anforderungen. Das bedeutet, daß neben der erhöhten Positioniergenauigkeit, Ebenheit und Flucht in immer stärkeren Maße höhere Anforderungen an die Gleichförmigkeit der CNC-Achsantriebe zueinander gestellt werden. Diese ist zur Herstellung von Bohrungen, Radien, kreisrunden Innen- und Außenpassungen sowie jeder Art von gewölbten Flächen durch Fräsen besonders wichtig. Je genauer die Gleichförmigkeit der CNC-Achsantriebe ist, desto genauer können Bohrungen, Radien oder gewölbte Flächen gefertigt werden, ohne daß hierzu ein besonderer zusätzlicher Aufwand erforderlich ist. Dies ist die Grundlage für die von vielen Firmen angestrebte Hochgeschwindigkeitsbearbeitung. Deren Vorteil besteht darin, daß Nacharbeiten von Hand sowie Schleif- und Poliervorgänge nicht mehr oder nur noch in begrenztem Maße erforderlich sind.

Eine solch hohe Produktionsgenauigkeit kann nur erzielt werden, wenn die NC-Maschinen regelmäßig mit hochgenauen Meßvorrichtungen vermessen und kalibriert werden. Für die Herstellung hochgenauer kreisrunder Bohrungen etc. ist die Vermessung der CNC-Maschine mit Hilfe eines Kreisformtestes erforderlich. Nur mit dessen Hilfe ist es möglich, die Genauigkeit eines Kreises rationell und kostengünstig zu ermitteln.

Die eingangs beschriebene Überprüfungsvorrichtung erfordert für verschiedene Durchmesser verschiedene Referenzzylinder. Außerdem ist ein Führungsarm notwendig.

Aus der EP-A-0 258 471 ist ein Kreistester bekannt geworden, der die Merkmale des Oberbegriffs des Anspruchs 1 aufweist.

Es liegt infolgedessen die Aufgabe vor, eine Überprüfungsvorrichtung der eingangs genannten Art so weiterzubilden, daß die genannten Nachteile nicht mehr auftreten und insbesondere auf die Verwendung eines Referenzzylinders verzichtet werden kann, ohne hierdurch Nachteile hinsichtlich der Genauigkeit der Kreisbahnausmessung und -einstellung in Kauf nehmen zu müssen, die durch die Magnethalterung besteht bzw. entsteht.

Zur Lösung dieser Aufgabe wird eine Vorrichtung vorgeschlagen, die die Merkmale des Anspruchs 1 aufweist.

Anstelle des Referenzzylinders wird bei dieser Vorrichtung die Aufstelleinheit am Maschinentisch angebracht, wobei sich deren geometrische Achse an der Stelle befindet, an der sich bei Verwendung der vorbekannten Vorrichtung die geometrische Achse des Referenzzylinders befinden würde oder anders ausgedrückt, an der sich später die geometrische Achse der zu bearbeitenden oder zu erstellenden Bohrung oder Mantelfläche des Werkstücks befindet. Diese geometrische Achse verläuft parallel zu derjenigen der das Bearbeitungswerkzeug aufnehmenden Spindel. Beide geometrischen Achsen sind aber in Querrichtung gegeneinander versetzt, wobei der Seitenabstand der wirksamen Länge des Meßwertaufnehmers oder eines diesen aufnehmenden Bauteils entspricht. Außer dieser Überprüfungsvorrichtung sind weitere Elemente und Hilfsvorrichtungen nicht erforderlich.

Dabei ist vorgesehen daß das Gehäuse der Aufstelleinheit hohl ist und sich in seinem Inneren ein Drehgeber befindet, in welchen das ins Innere ragende untere Ende des drehbaren Innenteils der Aufstelleinheit zentrisch eingreift. Mit Hilfe dieses Drehgebers läßt sich genau feststellen und auch festhalten, an welcher Stelle der Kreisbahn sich die geometrische Achse der Arbeitsspindel bzw. des Einspannglieds gerade befindet. Damit läßt sich eine gegebenenfalls festgestellte "Fehlerstelle" örtlich genau erfassen.

Am Maschinentisch wird lediglich das Gehäuse des Meßwertaufnehmers genau fixiert, während sich dessen Innenteil beim Durchlaufen der Kreisbahn bzw. um die Arbeitsspindel im Gehäuse um eine zur Tischebene senkrechten Ebene dreht. Eine geeignete Kabelführung und elektrische Verbindung der Überprüfungsvorrichtung mit einem Rechner bzw. PC schließt das Verdrillen und Aufwickeln des Meßkabels aus.

Eine Weiterbildung der Erfindung ergibt sich aus Anspruch 2. Die dort erwähnten Gelenke ermöglichen das Führen des mit der Arbeitsspindel der Maschine fest verbundenen Einspannglieds entlang einer Kreisbahn um die geometrische Achse der Aufstelleinheit, obwohl beide über ein quer hierzu verlaufendes, radial zur Spindel und zur Aufstelleinheit ausgerichtetes, den Meßwertaufnehmer aufweisendes Zwischenstück der Überprüfungsvorrichtung mechanisch miteinander verbunden sind. Den beiden Gelenken kommt allerdings nur beim Anbringen der Vorrichtung am Arbeitstisch und an der Spindel der Bearbeitungsmaschine Bedeutung zu. Während des Messens findet in den Gelenken keine Drehbewegung statt.

Eine weitere Ausgestaltung der Vorrichtung beschreibt Anspruch 3. Wenn dort vom "spindelabgewandten Ende des Meßwertaufnehmers" die Rede ist, so ist dies ebenso wie in Anspruch 2 und anderen Ansprüchen so auffassen, daß damit auch ein "Zwischenstück" angesprochen ist, falls sich der Meßwertaufnehmer in einem solchen befindet und er selbst keine Gelenkhälften aufweist. Letzteres dürfte die Regel sein.

Lagerkombinationen aus spielfreien Kugelscheiben und -büchsen sind als solche vielfältig bekannt und im Handel, weswegen sie an dieser Stelle nicht näher beschrieben werden müssen. Aus der Zeichnung des Ausführungsbeispiels gehen sie aber deutlich hervor. Auf jeden Fall handelt es sich insoweit um Präzisionslager, weil ihre Qualität selbstverständlich Auswirkungen auf das Meßergebnis hat. Im übrigen sind diese Lager spielfrei und vorgespannt. Insoweit ergibt sich eine weitere Verbesserung der Vorrichtung aus Anspruch 4.

Der zapfenartige Teil des drehbaren Innenteils der Aufstelleinheit muß selbstverständlich auch mit der notwendigen optimalen Qualität im Gehäuse der Aufstelleinheit gelagert werden. Auch dabei kann man käufliche Lager oder Lagereinheiten verwenden, was allerdings nicht ausschließt, daß man sie mit Bauteilen der Vorrichtung kombiniert, beispielsweise in dem Sinne, daß man auf einen Innenring eines Radiallagers verzichtet und stattdessen ein Bauteil mit der notwendigen Qualität heranzieht. Diesbezügliche Weiterbildungen der Erfindung ergeben sich aus den Ansprüchen 5 und 6. In diesem Zusammenhang erreicht man eine recht kompakte Bauweise, indem man die im Anspruch 6 erwähnte Mutter als ein Element des unteren Axiallagers ausbildet. Auch im oberen Axiallager kann man in vorteilhafter Weise dementsprechend verfahren.

Eine besonders bevorzugte Variante der Erfindung sieht vor, daß sämtliche Lagerstellen der Vorrichtung gekapselt sind, d.h. sie sind zumindest staubdicht, zweckmäßigerweise aber auch vor anderen schädlichen Einflüssen, wie beispielsweise Feuchtigkeit, gut geschützt. Hinsichtlich der staubdichten Kapselung kann man auf bewährte Konstruktionen zurückgreifen.

Eine weitere Ausgestaltung der Erfindung ist dadurch gekennzeichnet, daß der zapfenartige Teil des Innenteils der Aufstelleinheit einen zentrischen Kabelkanal aufweist, in den ein Radialkanal der Gelenkgabel des Innenteils einmündet. Das mit dem Meßwertaufnehmer verbundene bzw. von diesem ausgehende Kabel wird also außen am Gelenk zwischen der Aufstelleinheit und dem Zwischenstück vorbeigeführt und über den zentrischen Kabelkanal ins Innere der Aufstelleinheit gebracht. Beim Messen findet keine Verdrillung des Kabels mehr statt, weswegen man bedenkenlos mit dem Einspannglied die Aufstelleinheit mehrere Male "umkreisen" kann, falls dies aus meßtechnischen Gründen erforderlich ist.

Eine Weiterbildung dieser Konstruktion ergibt sich aus Anspruch 11. Der dort erwähnte Winkelschrittgeber ist als solcher bekannt und käuflich erwerbbar. Gegebenenfalls muß er an die Konstruktion noch angepaßt werden. Wichtig ist vor allen Dingen, daß eine Referenzmarke und/oder eine Richtungskennung vorhanden sind. Damit ist nämlich eine Messung vorwärts und rückwärts, d.h. in beiden Drehrichtungen möglich. Man kann eine sehr feinfühlige Ausführung beispielsweise mit 6000 Impulsen auf 360° wählen. Bei dieser Art von Drehgeber spielt die Geschwindigkeit der Drehung keine Rolle. Sie kann durchaus variiert werden. Dies gilt sowohl hinsichtlich der Drehung in lediglich einer Drehrichtung als auch hinsichtlich der Drehung in Vor- und Rückwärtsrichtung. Drehgeber, wie man sie früher verwendet hat, welche die Winkelstellung über die Zeit erfassen, ermöglichen demgegenüber ein Rückfahren nicht. Insofern ist also die Ausbildung der Vorrichtung gemäß Anspruch 11 besonders zweckmäßig.

Eine besonders vorteilhafte Variante der Vorrichtung beschreibt Anspruch 12. Durch das Mitdrehen der Verstärkerplatine mit dem Innenteil der Aufstelleinheit ergibt sich in Verbindung mit der Ableitung des Meßwerts über einen Schleifring eine sichere Übermittlung der Daten von der erfindungsgemäßen Vorrichtung an einen PC oder eine andere elektronische Einrichtung.

Der Meßwertaufnehmer ist in besonders zweckmäßiger Weise als hochauflösender Induktivaufnehmer ausgebildet, mit einer elektrischen Spule und einem ferromagnetischen Kern, insbesondere mit Verstärkerkarte. Solche Meßwertaufnehmer sind hochgenau. Sie erfassen minimalste Wegänderungen und damit auch geringste Abweichungen von der Idealform der Kreisbahn.

Jeder Meßwertaufnehmer wird vor der Auslieferung bzw. dem Einbau in eine Meßvorrichtung, wie beispielsweise die erfindungsgemäße Überprüfungsvorrichtung, selbst genau überprüft. Dabei kann man minimalste Fehler erfassen und im Falle eines käuflichen Meßwertaufnehmers dem Käufer jeweils mitteilen, an welchem Bereich der Meßstrecke welche Abweichungen vom Idealwert auftreten. Wenn dann später während der Messung der betreffende Bereich des Meßwertaufnehmers für die Messung herangezogen wird, so kann man diesen gerätespezifischen Fehler in einem Rechner jeweils berücksichtigen und dadurch aus dem Meßergebnis heraushalten. Insoweit beschreiben die Ansprüche 15 und 16 eine sehr vorteilhafte Weiterbildung der Erfindung.

Die Aufstelleinheit ist während der Messung fest, beispielsweise mit dem Maschinentisch der Bearbeitungsmaschine, verbunden. Außerdem ist das Einspannglied in eine Spannzange, ein Spannfutter oder eine andere bekannte Spannvorrichtung der Arbeitsspindel der Bearbeitungsmaschine eingesetzt, insbesondere eingesteckt. Wenn nun bei einer derart montierten Überprüfungsvorrichtung aus irgendwelchen Gründen der Arbeitstisch gegenüber der Spindel verstellt wird, so würde dies ansich zu einer Zerstörung der Überprüfungsvorrichtung führen. Um nun diese mit hohen Kosten verbundene Zerstörung zu vermeiden, sieht eine weitere Ausgestaltung der Erfindung vor, daß das Einspannglied mit einer Sollbruchstelle versehen ist. Im Falle einer unsachgemäßen Verstellung der Bearbeitungsmaschine bricht das die Sollbruchstelle aufweisende Bauelement der Überprüfungsvorrichtung, wodurch weitergehende Schäden vermieden werden. Es bedarf dann später lediglich einer Auswechslung dieses Bautelements. Sinnvollerweise sieht man die Sollbruchstelle an einem Bautelement vor, das einerseits preiswert herzustellen und damit billig auszuwechseln ist, und das andererseits so montiert ist, daß es auch rasch und ohne besonderen Aufwand ersetzt werden kann. Insoweit ergibt sich eine zweckmäßige Konstruktion aus Anspruch 19.

Eine zweite Sicherung der Überprüfungsvorrichtung gegen Beschädigung bei unsachgemäßer Bedienung der Bearbeitungsmaschine ergibt sich aus Anspruch 20. Demgemäß ist die Aufstelleinheit mit wenigstens einem Magneten versehen, mit dessen Hilfe sie am ferromagnetischen Arbeitstisch der Bearbeitungsmaschine festgehalten werden kann. Es kann sich dabei um mindestens einen Permanentmagneten handeln. Andererseits ist aber auch die Ausbildung als Magnetfuß möglich, wie man ihn bei vielen Meß- und Haltevorrichtungen mit Permanentmagneten kennt. Selbstverständlich muß darauf geachtet werden, daß elektronische Bauteile, insbesondere im Inneren der Aufstelleinheit, durch den oder die Magneten nicht beeinflußt werden.

Weitere Ausgestaltungen dieser Überprüfungsvorrichtung sowie hieraus resultierende Wirkungsweisen und Vorteile ergeben sich aus der nachfolgenden Beschreibung eines Ausführungsbeispiels.

Die Zeichnung zeigt ein solches Ausführungsbeispiel der Erfindung. Hierbei stellen dar:
- Figur 1: eine Seitenansicht der Überprüfungsvorrichtung;
- Figur 2: in vergrößertem Maßstab einen Schnitt gemäß der Linie II - II der Figur 1;
- Figur 3: schematisiert die Hälfte einer Draufsicht auf den Mittelteil der Figur 2;
- Figur 4: in etwas vergrößertem Maßstab einen Längsschnitt durch das Zwischenstück der Vorrichtung gemäß der Linie IV - IV in vergrößertem Maßstab;
- Figur 5: ebenfalls in vergrößertem Maßstab einen Längsschnitt gemäß der Linie V - V der Figur 1;
- Figur 6: in vergrößertem Maßstab einen Ausschnitt aus Figur 2.

Wesentliche Elemente der erfindungsgemäßen Überprüfungsvorrichtung für die Genauigkeit der Kreisbahn, auf der eine Arbeitsspindel einer NC-Maschine bei der Herstellung hochgenauer kreisrunder Bohrungen, Innen- und Außenflächen sowie Radien bewegt wird, sind eine Aufstelleinheit 1, ein Zwischenstück 2 und ein Einspannglied 3. Letzteres wird mit einer nicht dargestellten Arbeitsspindel der NC-Maschine verbunden, mit deren Hilfe ebenfalls nicht gezeigte Werkstücke bearbeitet werden sollen. Dabei wird beispielsweise ein Einspannzapfen 4 in eine Spannzange, ein Spannfutter oder dergleichen Haltevorrichtung an der Arbeitsspindel der Bearbeitungsmaschine eingesteckt und festgeklemmt. Die Aufstelleinheit 1 bzw. deren Gehäuse 5 wird insbesondere mit Hilfe einer Magnetkraft auf dem ferromagnetischen Arbeitstisch der Bearbeitungsmaschine festgehalten. Die Anordnung erfolgt so, daß die geometrische Längsachse 6 der Aufstelleinheit an genau derselben Stelle ist, an welcher sich bei der Bearbeitung des Werkstücks die geometrische Achse, beispielsweise einer zu erstellenden oder zu bearbeitenden Bohrung oder eines kreiszylindrischen Außenmantels des Werkstücks befindet. Wenn ein solcher Außenmantel bearbeitet wird, so befindet sich anstelle des Einspannglieds 3 ein entsprechendes Bearbeitungswerkzeug in der Werkzeugaufnahme der Arbeitsspindel. Bei der Bearbeitung umkreist dann die geometrische Längsachse 7 der Arbeitsspindel, welcher bei der Überprüfung auch die geometrischen Längsachse des Einspannglieds 3 entspricht, die geometrische Längsachse 6 der Aufstelleinheit 1 bzw. später der Werkstückbohrung oder des Werkstückmantels. Nachstehend wird der Einfachheit halber davon ausgegangen, daß mit Hilfe des Bearbeitungswerkzeugs in der Arbeitsspindel ein zylindrischer Außenmantel eines Werkstücks bearbeitet bzw. erstellt werden soll. Es kann sich beim Bearbeitungswerkzeug um einen Fräser handeln, der entlang der zu überprüfenden Kreisbahn um die geometrische Achse 6 bewegt werden soll. Weil die Bearbeitungsmaschine eine NC-Maschine ist, erfolgt dabei der Vorschub des Werkzeugs entlang der Kreisbahn über eine überlagerte Bewegung in x- und y-Richtung des Koordinatensystems, beispielsweise in der Ebene der Stützfläche für die Aufstelleinheit 1. Problematisch sind dabei die Stellen, an welchen zum Beispiel von einer Plus-x-in eine Minus-x-Richtung übergegangen wird.

Weil an die Gleichförmigkeit der CNC-Achsantriebe immer höhere Anforderungen gestellt werden, ist es erforderlich, die überlagerte Vorschubbewegung so genau auszuführen, daß sie der theoretischen Kreisbahn entspricht. Wenn man also vor der Bearbeitung die Arbeitsspindel mit Hilfe der erfindungsgemäßen Überprüfungsvorrichtung gegenüber der geometrischen Längsachse 6 so ausrichtet, daß die Bewegungsbahn möglichst genau der theoretischen Kreisbahn entspricht, so hat man die Gewähr, daß später auch eine optimale Bearbeitung bzw. Erstellung der Mantelfläche erzielt wird. Wenn die erste Messung oder auch mehrere Messungen ergeben, daß diese theoretisch optimale Kreisbahn noch nicht erreicht ist, so kann man die Positionierung der Spindel so lange korrigieren, bis die Überprüfung den angestrebten optimalen Wert ergibt. Die erfindungsgemäße Überprüfungsvorrichtung ermöglicht es, eine hohe Genauigkeit der Kreisbahn auf rationelle und kostengünstige Weise zu erzielen.

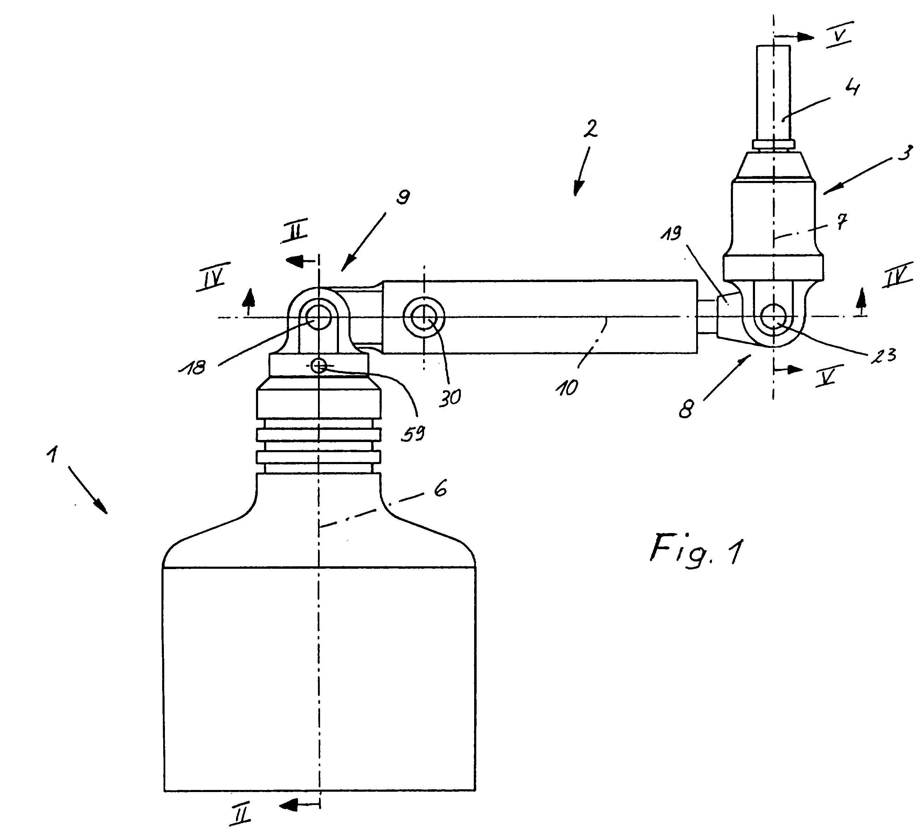

Die beiden Enden des Zwischenstücks 2 sind mit dem Einspannglied 3 über ein erstes Gelenk 8 und mit der Aufstelleinheit 1 über ein zweites Gelenk 9 jeweils schwenkbar verbunden. Die Schwenkebenen liegen dabei in der Blattebene der Figur 1. Beim Messen verläuft die geometrische Längsachse 7 des Einspannglieds 3 parallel zur geometrischen Längsachse 5 der Aufstelleinheit 1. Die geometrische Längsachse 10 des Zwischenstücks 2 erstreckt sich jeweils senkrecht hierzu. Sie liegt in der gleichen Ebene.

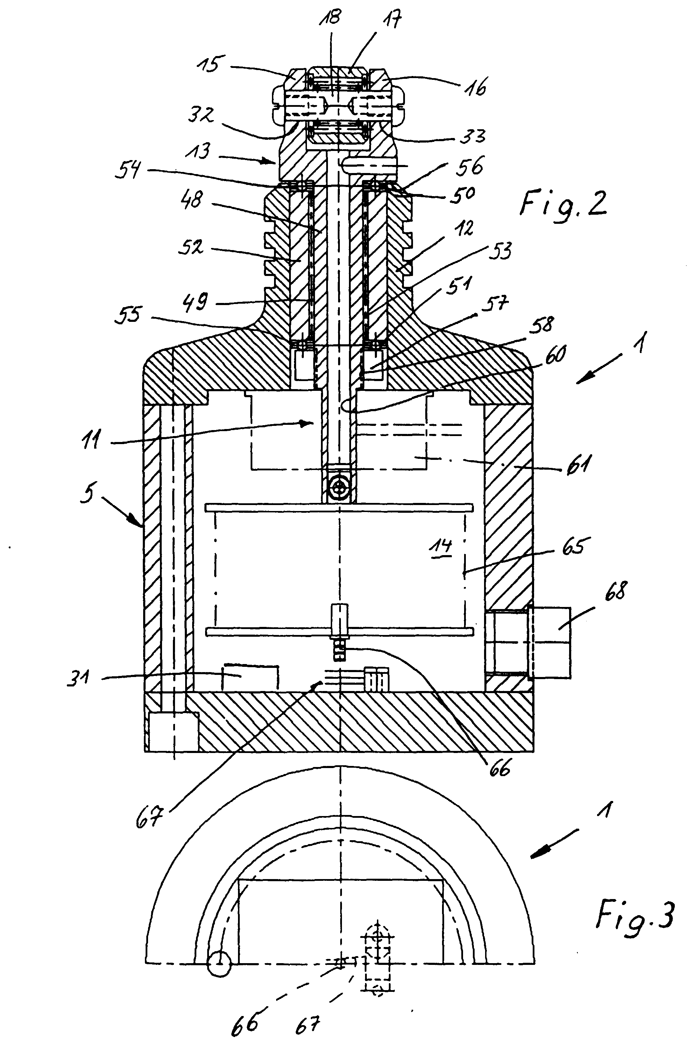

Wesentliche Elemente der Aufstelleinheit 1 sind deren bereits erwähntes Gehäuse 5 und ein dazu konzentrisch angeordnetes drehbares Innenteil 11. Es durchsetzt einen in Figur 2 nach oben ragenden rohrförmigen Ansatz oder Hals 12 des Gehäuses 5. Am oberen Ende trägt es eine Gelenkgabel 13, und sein unteres Ende ragt ins Innere 14 des Gehäuses 5 hinein. Zwischen die beiden Gabelzinken 15 und 16 greift das in Figur 1 linke Lagerauge 17 des Zwischenstücks 2. Das ganze wird von einem Lagerbolzen 18 quer durchsetzt. Am in Figur 1 rechten Ende des Zwischenstücks 2 befindet sich ein weiteres bzw. rechtes Lagerauge 19, welches zwischen die Gabelzinken 20, 21 einer Gelenkgabel 22 am in Figur 1 unteren Ende des Einspannglieds 3 eingreift. Die dortige Gelenkverbindung weist einen Lagerbolzen 23 auf. Die nachstehend näher beschriebene Konstruktion der Gelenke 8 und 9 ist vorzugsweise identisch, weil dies eine kostengünstigere Herstellung ermöglicht.

Vorstehend wurde bereits ausgeführt, daß die Bahnkurve der geometrischen Achse 7 des Einspannglieds 3 die zu überprüfende Kreisbahn darstellt. Durch deren Mittelpunkt verläuft die geometrische Achse 6 der Aufstelleinheit 1. Der Radius der Kreisbahn entspricht dem Seitenabstand der beiden geometrischen Achsen 7 und 6. Wenn Abweichungen von der Kreisbahn auftreten, so verändert sich der Seitenabstand der beiden geometrischen Achsen 6 und 7. Diese Veränderung nimmt ein Meßwertaufnehmer 24 des Zwischenstücks 2 mit hoher Genauigkeit wahr. Es ist leicht einsehbar, daß der Meßwertaufnehmer 24 selbst das Zwischenstück bilden kann. Beim Ausführungsbeispiel ist er allerdings in ein zweiteiliges Zwischenstück eingesetzt. Der äußere und auch größere Teil 25 des Zwischenstücks 2 weist das linke Lagerauge 17 der Figur 1 auf, während sich am kleineren, in eine Bohrung 26 eingeschobenen inneren Teil 27 des Zwischenstücks 2 das in Figur 1 rechte Lagerauge 19 befindet.

Der Meßwertaufnehmer 24 ist in bevorzugter Weise ein hochauflösender Induktivmeßwert-Aufnehmer mit einer elektrischen Spule 28 und einem ferromagnetischen Kern 29.

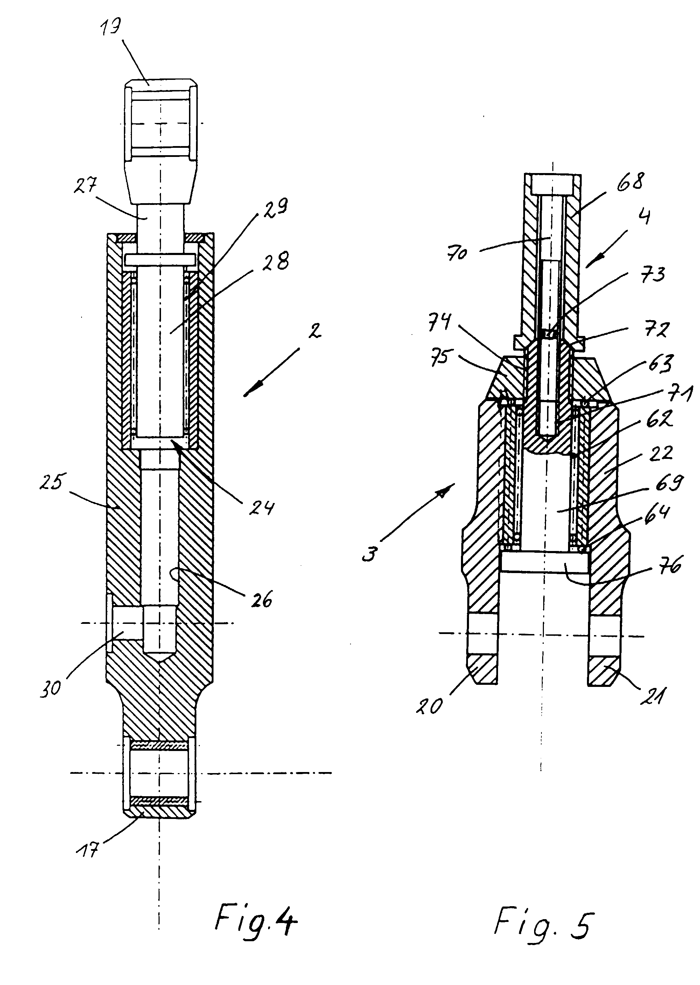

Eine Veränderung der Eintauchtiefe des ferromagnetischen Kerns in die Spule 28 bzw. umgekehrt bewirkt eine Änderung des elektrischen Meßwerts. Abweichend von der Darstellung in Figur 4 kann nämlich auch die Spule 28 den ferromagnetischen Kern umgeben, wobei es aber zweckmäßig ist, dann auch letzteren am inneren Teil 27 des Zwischenstücks 2 vorzusehen. Über die zentrische Axialbohrung 26 des äußeren Teils 25 und eine deren in Figur 4 unterem Ende zugeordnete Radialbohrung 30 werden die elektrischen Leitungen zum Meßwertaufnehmer 24 geführt. In zeichnerisch angedeuteter, aber nicht näher ausgeführter Weise ist der Meßwertaufnehmer 24 gegen äußere Einflüsse geschützt. Außerdem handelt es sich um eine abgeeichte Ausführungsform mit einer Verstärkerkarte. Zur Erhöhung der Meßgenauigkeit werden die Abweichungen des Meßwertaufnehmers 24 ermittelt und als Korrekturwerte in einem Rechner gespeichert, dem auch die übrigen Daten der Messung zugeführt werden.

In Figur 2 ist schematisch ein Codierschalter 31 eingezeichnet. Er soll vermeiden, daß bei Vorhandensein mehrerer derartiger Überprüfungsvorrichtungen in ein- und derselben Firma nicht die falschen Korrekturwerte des jeweiligen Meßwertaufnehmers 24 im Rechner verwendet werden.

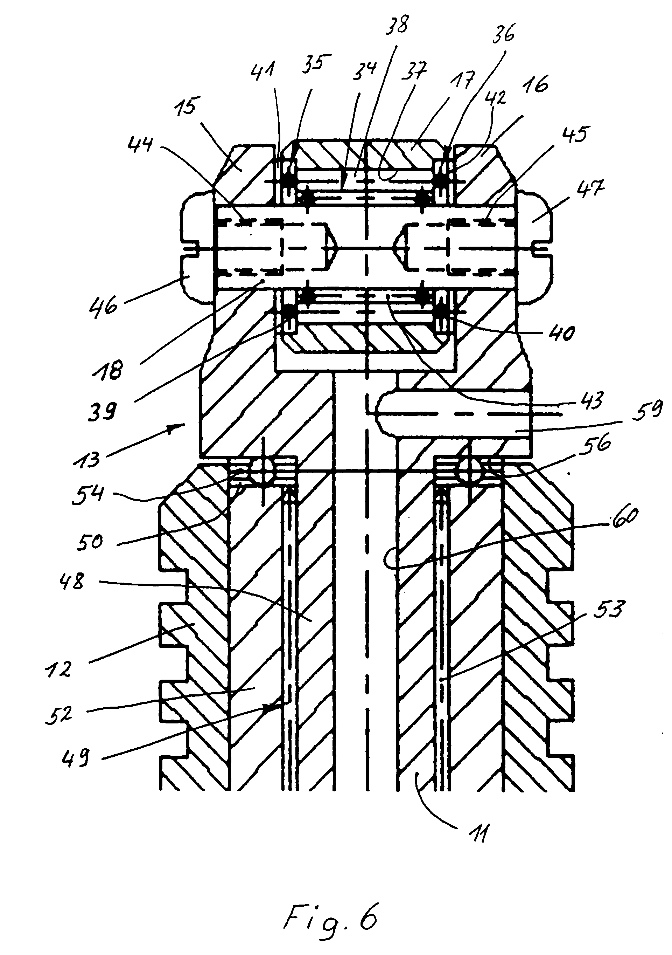

Der Lagerbolzen 18 steckt unmittelbar in den Bohrungen 32 bzw. 33 des Kabelzinkens 15 bzw. 16. In einem Ringraum zwischen dem mittleren Bereich des Lagerbolzens 18 und der Bohrung des Lagerraumes 17 befinden sich gemäß Figur 6 ein Radiallager 34 sowie zwei Axiallager 35 und 36. Die beiden Axiallager 35 und 36 werden dadurch gebildet, daß in die Bohrung 37 des Lagerauges 17 eine Hülse 38 eingeschoben ist, deren Enden je ein Käfig mit Kugeln 39 bzw. 40 zugeordnet ist. Außen liegen die Kugeln jeweils an einem Ring 41 bzw. 42 an, der zwischen den jeweiligen Gabelzinken 15 bzw. 16 und das Lagerauge 17 eingesetzt ist. Diese beiden Ringe werden auch vom Bolzen 18 zentrisch durchsetzt.

Das Radiallager 34 besteht aus einem Käfig 43 mit zwei parallelen ringförmigen Kugelreihen. Sie liegen innen an der Oberfläche des Bolzens 18 an und außen an der Bohrung der Hülse 38. Die Ringe 41 und 42 dienen gleichzeitig zur Kapselung dieser Lager.

An den beiden Enden des Lagerbolzens 18 befindet sich je ein Muttergewinde 44 bzw. 45. In jedes ist eine Schraube 46 bzw. 47 eingedreht, deren Kopf sich außen am zugeordneten Gabelzinken 15 bzw. 16 abstützt. Je stärker man die Schrauben eindreht, umso mehr werden die Gabelzinken 15 und 16 federelastisch nach innen gedrückt. Auf diese Weise kann man das Axialspiel zu 100 % ausschalten. Gleichzeitig trägt dies natürlich auch zur Abdichtung dieser Lagergruppe bei.

Der zapfenartige Teil 48 des drehbaren Innenteils 11 der Aufstelleinheit 1 ist mittels einer Kugelbüchse 49 sowie zweier Kugelscheiben 50 und 51 (Figuren 2 und 6) drehbar sowie axial unverschieblich im Hals 12 des Gehäuses 5 der Aufstelleinheit 1 gelagert. Zu diesem Zwecke ist in den Hals 12 eine Hülse 52 eingeschoben, insbesondere eingepreßt. Zwischen dieser und dem Mantel des zapfenartigen Teils 48 befindet sich eine Büchse mit Kugeln 53 der Kugelbüchse 49. Die Kugeln sind jeweils in einem Käfig 54 bzw. 55 gehalten, und sie liegen an den Stirnenden der Hülse 52 an. Desweiteren bildet die Schulter 56 am Übergang vom zapfenartigen Teil 48 zur Gelenkgabel 13 eine axiale Stützfläche für die obere Kugelscheibe 50. Die Kugeln der unteren Kugelscheibe 51 stützen sich nach unten hin an einer Mutter 57 ab, die auf ein Gewinde 58 des zapfenartigen Teils 48 aufgeschraubt ist.

Das durch die Radialbohrung 30 des Zwischenstücks 2 hindurchgeführte Kabel durchsetzt auch einen Radialkanal 59 sowie einen zentrischen Kanal 60 des drehbaren Innenteils 11 der Aufstelleinheit 1, d.h. es läuft außen am zweiten Gelenk 9 vorbei (Figur 1). Von dort wird es zum Rechner bzw. PC weitergeführt.

Im Inneren 14 des Gehäuses 5 der Aufstelleinheit 1 befindet sich ein lediglich schematisch angedeuteter Drehgeber 61. Er ist innen oben am Gehäuse 5 befestigt und wird vom unteren Ende des zapfenartigen Teils 48 des drehbaren Innenteils 11 mittig durchsetzt. Es handelt sich bevorzugterweise um einen Winkelschrittgeber, der insbesondere mit einer Referenzmarke und/oder Richtungskennung ausgestattet ist. Insofern läßt sich nicht nur der Nullpunkt der Drehbewegung exakt festlegen, sondern auch die Drehrichtung und die Drehgeschwindigkeit. Beim Ausführungsbeispiel sind der 360°-Drehung 6000 Impulse zugeordnet. Auf diese Weise kann die exakte Winkelposition des Meßtasters ermittelt werden. Sie kann unabhängig von der jeweiligen Drehgeschwindigkeit des Innenteils 11 bzw. der Vorschubgeschwindigkeit der Maschinenspindel genau erfaßt werden. Eine Änderung der Verfahrgeschwindigkeit hat auf das Meßergebnis keinen Einfluß. Dies ist insbesondere dann bedeutsam, wenn bei Umkehrung der Verfahrrichtung ein Kurvenversatz auftritt, der jedoch nicht mit genauen Winkelpositionenen aufgezeichnet wird. Dies ist vor allen Dingen bei den Steuerungen wichtig, bei denen die Möglichkeit besteht, die Spitzen an den Umkehrpunkten über Parameter wegzukorrigieren. Aufgrund der Richtungskennung des Drehgebers ist es möglich, automatische Messungen in verschiedenen Richtungen durchzuführen.

Zwischen den Einspannzapfen 4 und der Gelenkgabel 22 des Einspannglieds 3 sind auch eine Kugelbüchse 62 und zwei Kugelscheiben 63, 64 geschaltet. Insoweit kann die Konstruktion derjenigen im Bereich des Halses 12 des Gehäuses 5 entsprechen. Sämtliche beschriebenen Lager sind zumindest staubdicht und vorzugsweise auch feuchtigkeitsgeschützt.

Mit dem im Gebrauch unteren Ende des drehbaren Innenteils 11 der Aufstelleinheit 1 ist eine Verstärkerplatine 65 drehfest verbunden, die in Figur 2 mittels zweier strichpunktierter Linien nur schematisch angedeutet ist. Die Ausgangssignale gelangen an einen mehrbahnigen Schleifring 66, und sie werden dort mittels gehäusefester Kontaktfedern 67 abgegriffen. Der besseren Übersichtlichkeit wegen sind letztere in Figur 2 unterhalb des Schleifrings 66 eingezeichnet. Von den Kontaktfedern 67 führt eine nicht dargestellte elektrische Leitung zu einem Stecker 68 der Aufstelleinheit 1. Dort kann ein externes Kabel zu einem Rechner bzw. PC eingesteckt werden. Aufgrund der geschilderten Führung des Meßkabels in der Vorrichtung können Messungen selbst über mehrere Stunden oder gar Tage gefahren werden. Aufgrund der Referenzmarke am Drehgeber 61 können die Messungen auch bei unterschiedlicher Drehrichtung immer an der gleichen Winkelposition beginnen. Hierdurch kann die Datenerfassung entweder direkt hintereinander oder im zeitlichen Abstand sowie automatisch erfolgen.

Der Einspannzapfen 4 des Einspannglieds 3 ist zweiteilig ausgebildet. Er weist ein äußeres hülsenförmiges Teil 68 sowie ein inneres, den Lagern 62, 63 und 64 zugeordnetes Teil 69 auf. Beide sind mit Hilfe einer zentrischen Schraube 70 zusammengehalten, die in ein Muttergewinde 71 des inneren Teils 69 eingeschraubt wird. Ihr Kopf stützt sich an einer absatzartigen Bohrungserweiterung des äußeren Teils 68 ab. Die Zentrierung des inneren und äußeren Teils des Einspannzapfens 4 erfolgt über entsprechende Konusse 72. Die Schraube 70 ist mit einer Sollbruchstelle 73 ausgestattet. Bei unsachgemäßer Bedienung der Überprüfungsvorrichtung und insbesondere der Bearbeitungsmaschine bricht die Schraube 70 an dieser Stelle ab. Auf diese Weise wird ein größerer Schaden an der Überprüfungsvorrichtung verhindert. Dem selben Zweck dient auch die Befestigung des Gehäuses 5 der Vorrichtung am Maschinentisch mit Hilfe nicht dargestellter Magnete am Gehäuse 5.

Im Bereich der Konusse 72 ist am inneren Teil 69 des Einspannzapfens 4 ein Bolzengewinde 74 angebracht, auf welches eine Mutter 75 aufgeschraubt ist. Sie und ein verdickter Kopf 76 am unteren Ende des inneren Teils 69 ermöglichen die Ausschaltung des Axialspiels der beiden Kugelscheiben 63 und 64.

## Patentansprüche

1. Vorrichtung zur Überprüfung der Genauigkeit der Kreisbahn, auf der eine Arbeitsspindel einer NC-Maschine bei der Herstellung hochgenauer kreisrunder Bohrungen, Innen- und Außenflächen sowie Radien bewegt wird, mit einem elektronischen Meßwertaufnehmer (24), dessen Meßwert mittels eines Verstärkers verstärkt und dann angezeigt und/oder aufgezeichnet wird, wobei der Meßwertaufnehmer (24) über ein Einspannglied mit der Arbeitsspindel der NC-Maschine verbindbar ist und seine Meßrichtung dabei radial zur Spindelachse verläuft, **dadurch gekennzeichnet**, daß der Meßwertaufnehmer (24) oder ein diesen aufnehmendes Zwischenstück (2) mit einem drehbaren Innenteil (11) und einem dieses aufnehmenden Gehäuse (5) verbunden ist, wobei das spindelabgewandte Ende des Meßwertaufnehmers (24) oder Zwischenstücks (2) mit einem das Gehäuse (5) überragenden oberen Bereich des drehbaren Innenteils (11) drehfest verbunden ist, und die geometrische Drehachse (6) des letzteren beim Messen durch den Mittelpunkt der Kreisbahn verläuft und sich parallel zur geometrischen Achse (7) der Arbeitsspindel erstreckt, wobei das Gehäuse (5) der Aufstelleinheit (1) hohl ist und sich in seinem Innern ein Drehgeber (61) befindet, in welchen das ins Innere ragende untere Ende des drehbaren Innenteils (11) der Aufstelleinheit (1) zentrisch eingreift.

2. Vorrichtung nach Anspruch 1, dadurch gekennzeichnet, daß das spindelseitige erste Ende des Meßwertaufnehmers (24) über ein erstes Gelenk (8) mit dem Einspannglied (3) und das spindelabgewandte zweite Ende des Meßwertaufnehmers (24) über ein zweites Gelenk (9) mit dem drehbaren Innenteil (11) einer Aufstelleinheit (1) jeweils gelenkig verbunden ist.

3. Vorrichtung nach Anspruch 2, dadurch gekennzeichnet, daß das spindelabgewandte Ende des Meßwertaufnehmers (24) bzw. Zwischenstücks (2) als Lagerauge (17) ausgebildet ist, das in eine Gelenkgabel (13) am oberen Bereich des Innenteils (11) der Aufstelleinheit (1) eingreift, wobei Bohrungen des Lagerauges (17) und der Gabelzinken (15, 16) einen Lagerbolzen (18) aufnehmen, der eine Lagerkombination aus einer Kugelbüchse (34) und zwei Kugelscheiben (35, 36) durchsetzt werden.

4. Vorrichtung nach Anspruch 3, dadurch gekennzeichnet, daß zur Ausschaltung des Axialspiels die Gabelzinken (15, 16) mittels mindestens einer axial in ein Lagerbolzengewinde (44, 45) eingreifenden Schraube (46, 47) federelastisch gegeneinander drückbar sind.

5. Vorrichtung nach wenigstens einem der vorhergehenden Ansprüche, dadurch gekennzeichnet, daß ein zapfenartiger Teil (48) des drehbaren Innenteils (11) eine zentrische Bohrung des Gehäuses (5) der Aufstelleinheit (1) längs durchsetzt, wobei zwischen den die Bohrungen aufweisenden, insbesondere rohrartigen Bereich oder Hals (12) des Gehäuses (5) und den zapfenartigen Teil (48) eine Kugelbüchse (49) und zwei Kugelscheiben (50, 51) geschaltet sind.

6. Vorrichtung nach Anspruch 5, dadurch gekennzeichnet, daß das Spiel der beiden Kugelscheiben (50, 51) mittels einer auf ein Bolzengewinde (58) des zapfenartigen Teils (48) des Innenteils (11) aufschraubbaren Mutter (57) ausschaltbar ist.

7. Vorrichtung nach Anspruch 6, dadurch gekennzeichnet, daß die Mutter (57) einen Teil der im Gebrauch unteren Kugelscheibe (51) bildet.

8. Vorrichtung nach einem der Ansprüche 5 bis 7, dadurch gekennzeichnet, daß in die zentrische Bohrung des Gehäuses (5) eine den zapfenartigen Teil (48) des Innenteils (11) aufnehmende, insbesondere teilweise Lagerflächen bildende Hülse (52) eingesetzt ist.

9. Vorrichtung nach einem der vorhergehenden Ansprüche, dadurch gekennzeichnet, daß sämtliche Lagerstellen (34 bis 36; 49 bis 51; 62 bis 64) gekapselt sind.

10. Vorrichtung nach einem der Ansprüche 5 bis 9, dadurch gekennzeichnet, daß der zapfenartige Teil (48) des Innenteils (11) einen zentrischen Kabelkanal (60) aufweist, in den ein Radialkanal (59) der Gelenkgabel (13) des Innenteils (11) einmündet.

11. Vorrichtung nach wenigstens einem der vorhergehenden Ansprüche, dadurch gekennzeichnet, daß der Drehgeber (61) als Winkelschrittgeber, insbesondere mit Referenzmarke und/oder Richtungskennung, ausgebildet ist.

12. Vorrichtung nach Anspruch 10 oder 11, dadurch gekennzeichnet, daß mit dem freien, im Gebrauch unteren Ende des drehbaren Innenteils (11) eine Verstärkerplatine (65) verbunden ist, deren Ausgang mit mindestens einem, vorzugsweise mehrbahnigen Schleifring (66) in elektrisch leitender Verbindung steht, und daß dem Schleifring (66) Abnehmer (67) zugeordnet sind, die vorzugsweise innen an einem Boden des Gehäuses (5) befestigt sind.

13. Vorrichtung nach einem der Ansprüche 2 bis 13, dadurch gekennzeichnet, daß das erste Gelenk (8) zwischen dem Einspannglied (3) und dem spindelseitigen ersten Ende des Meßwertaufnehmers (24) bzw. Zwischenstücks (2), einschließlich der Lagerung dem zweiten Gelenk (9) entspricht, wobei sich insbesondere die Gelenkgabel (22) am Einspannglied (3) befindet.

14. Vorrichtung nach einem der vorhergehenden Ansprüche, dadurch gekennzeichnet, daß der Meßwertaufnehmer (24) als hochauflösender Induktivmeßwertaufnehmer ausgebildet ist, mit einer elektrischen Spule (28) und einem ferromagnetischen Kern (29), insbesondere mit Verstärkerkarte.

15. Vorrichtung nach einem der vorhergehenden Ansprüche, dadurch gekennzeichnet, daß die Abweichungen des Meßwertaufnehmers (24) ermittelt und als Korrekturwerte im Rechner gespeichert werden.

16. Vorrichtung nach Anspruch 15, gekennzeichnet durch einen Codierschalter (31) im Gehäuse (5) zur richtigen Zuordnung der Korrekturwerte eines Meßwertaufnehmers (24) zu einer bestimmten Überprüfungsvorrichtung.

17. Vorrichtung nach einem der vorhergehenden Ansprüche, dadurch gekennzeichnet, daß das Einspannglied (3) mit einer Sollbruchstelle (73) versehen ist.

18. Vorrichtung nach Anspruch 17, dadurch gekennzeichnet, daß die Sollbruchstelle (73) an einer zentrischen Schraube (70) des Einspannglieds (3) angebracht ist, die insbesondere einen zweiteiligen Einspannzapfen (4) zentrisch durchsetzt.

19. Vorrichtung nach Anspruch 18, dadurch gekennzeichnet, daß der Einspannzapfen (4) mittels einer Kugelbüchse (62) und zweier Kugelscheiben (63, 64) spielfrei im Körper der Gelenkgabel (22) gelagert ist, wobei insbesondere die Lagerstellen gekapselt sind.

20. Vorrichtung nach einem der vorhergehenden Ansprüche, dadurch gekennzeichnet, daß die Aufstelleinheit (1) mit wenigstens einem Magneten versehen oder als Magnetfuß ausgebildet ist.

## Claims

1. Device for controlling the accuracy of the orbit on which a spindle used in a high precision manufacturing process for machining circular bores, inner and outer surfaces, and radii of a workpiece, is moved, comprising an electronic transducer (24) producing signals which are amplified by an amplifier and subsequently displayed and/or recorded, the transducer (24) being connected to the spindle of the NC machine by a clamping element, the measuring direction of the transducer is running in radial direction to the axis of the spindle, characterized in that, the transducer (24) or an intermediate piece (2) accommodating the transducer is connected with a rotatable inner part (11) and a housing (5) accommodating the inner part, the end of said transducer (24) or said intermediate piece (2) opposite to said spindle being connected rotational fixed to an upper region of the rotatable inner part (11) that protrudes beyond the housing (5), and the geometric axis (6) of said inner part is running through the central point of the orbit during the measurement and is running parallel to the geometric axis (7) of the spindle, the housing (5) of the control unit (1) being hollow and a shaft encoder (61) being arranged in the interior of said housing, with the lower end of the rotatable inner part (11) of the control unit (1) which protrudes into the interior of the housing centrally engaging with said shaft encoder (61).

2. A device according to claim 1, characterized in that the first end of the transducer (24) which faces the spindle is connected to a clamping element (3) with an articulated first joint (8), and the second end of the transducer (24) which is situated opposite to the spindle is connected to the rotatable inner part (11) of the control unit (1) with an articulated second joint (9).

3. A device according to claim 2, characterized in that the second end of the transducer (24) or the intermediate piece (2) which is situated opposite to the spindle is in the form of a bearing eye (17) that engages into an articulated fork (13) within the upper region of the inner part (11) of the control unit (1), with bores of the bearing eye (17) and of the fork tines (15, 16) accommodating a bearing journal (18) that extends through a bearing combination of a radial bearing (34) and two axial bearings (35, 36).

4. A device according to claim 3, characterized in that the fork tines (15, 16) can be elastically pressed against one another by means of at least one screw (46, 47) that engages axially into a bearing journal thread (44, 45) so as to eliminate axial play.

5. A device according to one of the preceding claims, characterized in that a pin-like part (48) of the rotatable inner part (11) longitudinally extends through a central bore of the housing (5) of the control unit (1), with a ball box (49) and two cylindrical disks (50, 51) being arranged within said neck (12) or tubular region with said bores of the housing (5) and the pin-like part (48) .

6. A device according to claim 5, characterized in that a nut (57) that is screwable onto a thread (58) of the pin-like part (48) of the inner part (11) eliminates the play of both cylindrical disks (50, 51).

7. A device according to claim 6, characterized in that the nut (57) forms part of the lower cylindrical disk (51) during the operation of the device.

8. A device according to one of the claims 5 to 7, characterized in that a sleeve (52) that accommodates the pin-like part (48) of the inner part (11), preferably partially forming bearing surfaces, is located within the central bore of the housing (5).

9. A device according to one of the preceding claims, characterized in that all bearings (34 to 36, 49 to 51, 62 to 64) are encapsulated.

10. A device according to at least one of the claim 5 to 9, characterized in that the pin-like part (48) of the inner part (11) comprises a central cable duct (6), with a radial duct (59) of the articulated fork (13) of the inner part (11) ending in the aforementioned cable duct.

11. A device according to claim 11, characterized in that the shaft encoder is a shaft encoder (61) is realized in the form of a shaft-angle encoder that, in particular, is provided with in the form of a reference marking and/or a directional identification.

12. A device according to claim 10 or 11, characterized in that an amplifying board (65) is connected to at the lower end of the rotatable inner part (11) during the operation of the device, an output of the board is in an electrically conductive relationship least one slip ring (66) which is preferably in form of a multitrack, and that sensors (67) preferable fastened on a base in the interior of the housing (5), cooperate with the slip ring (66).

13. A device according to one of the claim 2 to 13, characterized in that the first joint (8) between the clamping element (3) and the first end of the transducer (24) or the intermediate piece (2) which faces the spindle and the bearing corresponds to the second joint (9), and the articulated fork (22) is arranged particular on the clamping element (3).

14. A device according to one of the preceding claims, characterized in that the transducer (24) is a high-resolution inductive transducer that comprises an electric coil (28) and a ferromagnetic core (29) in particular with an amplifying board.

15. A device according to one of the preceding claims, characterized in that deviations of the transducer (24) are determined and stored in a computer in the form of correction values.

16. A device according to claim 15, characterized in that a coding switch (31) in the housing (5) properly allocates the correction values of the transducer (24) to a control device.

17. A device according to one of the preceding claims, characterized in that the clamping element (3) is provided with a predetermined breaking point (73).

18. A device according to claim 17, characterized in that the predetermined breaking point (73) is arranged on a central screw (70) of the clamping element (3) which in particular extends centrally through a two-part clamping pin (4).

19. A device according to claim 18, characterized in that the clamping pin (4) is arranged without play in the body of the articulated fork (22) by means of one ball box (62) and two cylindrical disks (63, 64), in particular with the bearing points being encapsulated.

20. A device according to one of the preceding claims, characterized in that the control unit (1) is provided with at least one magnet or is designed in the form of a magnetic chuck.

## Revendications

1. Dispositif destiné à vérifier la précision de l'orbite sur laquelle une broche d'une machine à CN est déplacée pour réaliser des perçages circulaires, des faces intérieures et extérieures ainsi que des rayons de haute précision, comprenant un capteur électronique (24) dont la valeur mesurée est amplifiée à l'aide d'un amplificateur puis affichée et/ou enregistrée, le capteur (24) pouvant être relié à la broche de la machine à CN par l'intermédiaire d'un élément de bridage, son sens de mesure s'étendant alors radialement par rapport à l'axe de broche, caractérisé en ce que le capteur (24) ou un élément intermédiaire (2) le portant est relié à une pièce intérieure mobile en rotation (11) et à un boîtier (5) dans lequel l'élément intermédiaire est logé, l'extrémité du capteur (24) ou de l'élément intermédiaire (2) opposée à la broche étant reliée de manière fixe en rotation à une zone supérieure de la pièce intérieure mobile en rotation (11) dépassant du boîtier (5), et l'axe de rotation géométrique (6) de la pièce intérieure mobile en rotation (11) passant, lors de la mesure, par le point central de l'orbite et s'étendant parallèlement à l'axe géométrique (7) de la broche, le boîtier (5) de l'unité d'installation (1) étant creux et contenant en son intérieur un encodeur (61) dans le centre duquel s'introduit l'extrémité inférieure, dépassant vers l'intérieur de la pièce intérieure (11) mobile en rotation de l'unité d'installation (1).

2. Dispositif selon la revendication 1, caractérisé en ce que la première extrémité du capteur (24) côté broche est articulée par l'intermédiaire d'une première articulation (8) sur l'élément de bridage (3) et que la deuxième extrémité du capteur (24) côté opposé à la broche est respectivement articulée par l'intermédiaire d'une deuxième articulation (9) sur la pièce intérieure mobile en rotation (11) d'une unité d'installation (1).

3. Dispositif selon la revendication 2, caractérisé en ce que l'extrémité du capteur (24) ou de l'élément intermédiaire (2) côté opposé à la broche est réalisée sous la forme d'un oeil de palier (17) qui s'introduit dans une fourche articulée (13) au niveau de la zone supérieure de la pièce intérieure (11) de l'unité d'installation (1), des perçages de l'oeil de palier (17) et des dents de fourche (15, 16) recevant un boulon de palier (18) qui traverse une combinaison de paliers comprenant un coussinet à billes (34) et deux rondelles à bille (35, 36).

4. Dispositif selon la revendication 3, caractérisé en ce que pour supprimer le jeux axial, les dents de fourche (15, 16) peuvent être appuyées de façon élastique l'une contre l'autre à l'aide d'au moins une vis (46, 47) qui s'introduit axialement dans un filetage de boulon de palier (44, 45).

5. Dispositif selon au moins l'une des revendications précédentes, caractérisé en ce qu'une pièce en forme de tourillon (48) de la pièce intérieure mobile en rotation (11) traverse le centre d'un perçage du boîtier (5) de l'unité d'installation (1) dans le sens longitudinal, un coussinet à billes (49) et deux rondelles à bille (50, 51) étant prévus entre la zone tubulaire ou la gorge (12) du boîtier (5) et la pièce en forme de tourillon (48).

6. Dispositif selon la revendication 5, caractérisé en ce que le jeu des deux rondelles sphériques (50, 51) peut être supprimé à l'aide d'un écrou (57) pouvant être vissé sur un filet de boulon (58) de la pièce en forme de tourillon (48) de la pièce intérieure (11).

7. Dispositif selon la revendication 6, caractérisé en ce que l'écrou (57) constitue un élément de la rondelle sphérique (51) inférieure lors de l'utilisation.

8. Dispositif selon l'une des revendications 5 à 7, caractérisé en ce que dans le perçage central du boîtier (5) est placée une douille (52) recevant la pièce en forme de tourillon (48) de la pièce intérieure (11) et formant notamment partiellement des surfaces de logement.

9. Dispositif selon l'une des revendications précédentes, caractérisé en ce que tous les points de palier (34 à 36 ; 49 à 51 ; 62 à 64) sont blindés.

10. Dispositif selon l'une des revendications 5 à 9, caractérisé en ce que la pièce en forme de tourillon (48) de la pièce intérieure (11) présente en son centre un canal à câble (60) dans lequel débouche un canal radial (59) de la fourche articulée (13) de la pièce intérieure (11).

11. Dispositif selon au moins l'une des revendications précédentes, caractérisé en ce que le codeur (61) est réalisé sous la forme d'un détecteur de position angulaire, notamment avec marque de référence et/ou détection de sens.

12. Dispositif selon la revendication 10 ou 11, caractérisé en ce qu'à l'extrémité, inférieure lors de l'utilisation, de la pièce intérieure mobile en rotation (11) une platine d'amplification (65) est reliée dont la sortie est en communication électriquement conductrice avec au moins une bague collectrice (66), de préférence à plusieurs voies, et que des consommateurs (67) qui de préférence sont fixés à l'intérieur sur un fond du boîtier (5) sont affectés à la bague collectrice (66).

13. Dispositif selon l'une des revendications 2 à 13, caractérisé en ce que la première articulation (8) entre l'élément de bridage (3) et la première extrémité du capteur (24) ou de l'élément intermédiaire (2) côté broche, y compris le palier, correspond à la deuxième articulation (9), notamment la fourche articulée (22) se trouvant sur l'élément de bridage (3).

14. Dispositif selon l'une des revendications précédentes, caractérisé en ce que le capteur (24) est réalisé sous la forme d'un capteur inductif à haute résolution, comprenant une bobine électrique (28) et un noyau ferromagnétique (29), notamment avec carte d'amplification.

15. Dispositif selon l'une des revendications précédentes, caractérisé en ce que les écarts du capteur (24) sont calculés et mémorisés dans le calculateur en tant que valeurs de correction.

16. Dispositif selon la revendication 15, caractérisé par un interrupteur de codage (31) à l'intérieur du boîtier (5) destiné à l'affectation correcte des valeurs de correction d'un capteur (24) à un dispositif de vérification déterminé.

17. Dispositif selon l'une des revendications précédentes, caractérisé en ce que l'élément de bridage (3) est pourvu d'un point de rupture théorique (73).

18. Dispositif selon la revendication 17, caractérisé en ce que le point de rupture théorique (73) est disposé sur une vis centrale (70) de l'élément de bridage, qui traverse notamment le centre d'un tourillon de bridage (4) en deux pièces.

19. Dispositif selon la revendication 18, caractérisé en ce que le tourillon de bridage (4) est logé sans jeu dans le corps de la fourche articulée (22) par l'intermédiaire d'un coussinet à billes (62) et de deux rondelles à bille (63, 64), où notamment les points de palier sont blindés.

20. Dispositif selon l'une des revendications précédentes, caractérisé en ce que l'unité d'installation (1) est pourvue d'au moins un aimant ou est réalisée sous la forme d'un pied magnétique.
